# FASCICULE DE BREVET EUROPEEN

(11) **EP 2 842 115 B1**
(45) Date de publication et mention de la délivrance du brevet: **21.03.2018**
(21) Numéro de dépôt: 13719827.1
(22) Date de dépôt: 26.04.2013
(51) Int. Cl.: G08C 17/02, H04L 12/28, H04W 24/00

(54) **PROCÉDÉ DE COMMUNICATION DANS UNE INSTALLATION DOMOTIQUE**
VERFAHREN ZUR KOMMUNIKATION IN EINER DOMOTIKANLAGE
METHOD OF COMMUNICATING IN A HOME-AUTOMATION INSTALLATION

(30) Priorité: 27.04.2012 FR 1253963
(43) Date de publication de la demande: 04.03.2015
(73) Titulaire: SOMFY ACTIVITES SA, 74300 Cluses (FR)
(72) Inventeur: ROUX, Morgan, F-74190 Passy (FR); NEUMAN, Serge, F-74600 Seynod (FR); BEAUJEU, Thierry, F-74970 Marignier (FR)
(74) Mandataire: Novaimo
(86) Numéro de dépôt international: PCT/EP2013/058807
(87) Numéro de publication internationale: WO 2013/160473

(56) Documents cités:
- WO-A2-03/093951
- WO-A2-2005/041467

## Description

L'invention concerne le domaine des installations immotiques comprenant des équipements immotiques, comme des actionneurs électriques d'entraînement des éléments mobiles dans un bâtiment, tels que des éléments mobiles de fermeture ou de protection solaire, ou de pilotage des équipements d'éclairage, chauffage et ventilation.

Ces installations immotiques permettent d'assurer la sécurité et/ou le confort lumineux et/ou thermique dans le bâtiment. Elles permettent de réaliser des économies en énergie en régulant les flux énergétiques (apports thermiques et ventilation naturelle). Les éléments mobiles peuvent être des stores d'intérieur, par exemple des stores vénitiens à lames orientables, ou des stores enroulables, ou des écrans extérieurs, des panneaux rigides orientables, etc.

Au niveau de chaque élément mobile, des actionneurs pilotent le mouvement de ces éléments mobiles ; au niveau des équipements d'éclairage, de chauffage, de ventilation, des actionneurs pilotent l'état de ces équipements. Les actionneurs sont gérés de manière individuelle ou centrale, par groupe, au niveau de la pièce, de l'étage, de la façade à laquelle ils appartiennent ou simplement au niveau du bâtiment. Cette gestion est effectuée de manière automatique par un ou plusieurs éléments de commande ou de contrôle, qui récupèrent également un certain nombre d'informations auprès de divers capteurs positionnés à l'intérieur et à l'extérieur du bâtiment (capteurs de présence, de température, de luminosité, horloges, etc.).

Chaque équipement ou chaque actionneur peut également être piloté normalement par un utilisateur, individuellement ou dans un groupe, par l'intermédiaire d'une unité de commande locale.

Souvent, pour des raisons de coût et de simplicité d'installation, le pilotage est effectué par transmission unidirectionnelle d'ordres depuis l'unité de commande locale ou depuis l'élément de contrôle vers l'actionneur ou les actionneurs à piloter. Dans le cas d'un utilisateur qui peut constater l'exécution des ordres envoyés cette transmission unidirectionnelle peut être suffisante ; mais dans le cas d'envoi automatique, il n'y a pas de voie de retour vers l'émetteur lui permettant d'évaluer si les messages envoyés ont été correctement reçus ou exécutés par leur destinataires. Dans un environnement perturbé il y a un risque important de perte de messages, et donc les actions souhaitées ne seront pas exécutés. Une alternative serait de répéter systématiquement les messages envoyés de manière automatique, mais cette solution conduirait à un encombrement du réseau et à un fonctionnement dans un environnement encore plus perturbé ; cette solution n'apporterait pas d'information sur une réception défectueuse et par conséquent sur une non-exécution. Une autre alternative serait l'utilisation d'une communication bidirectionnelle comprenant une voie de retour vers l'émetteur, comme décrit dans la publication WO2005/041467, mais cette solution engendrerait des coûts plus élevés et une installation plus complexe.

Le but de l'invention est de fournir une installation remédiant aux inconvénients mentionnés et améliorant les installations connues de l'art antérieur. En particulier, l'invention propose une solution simple et économique d'évaluer si un message donné a été correctement reçu par un élément auquel il est destiné.
Le terme d'actionneur utilisé dans cette demande comprend notamment la partie électronique ou électromécanique permettant le contrôle du mouvement d'un élément mobile ou le contrôle d'état d'une charge, par exemple d'une lampe, d'une installation de chauffage ou de ventilation, mais également les moyens électroniques de dialogue avec les différents autres équipements de l'installation, notamment les dispositifs d'émission et/ou de réception de trames de communication échangées entre les différents composants de l'installation selon des moyens connus.

Le terme d'équipements électriques du bâtiment utilisé dans cette demande comprend les actionneurs tels que définis précédemment, ainsi que des moyens d'interface et de commande de groupe d'actionneurs, et tout dispositif disposant des moyens de dialogue avec d'autres dispositifs ou avec d'autres équipements donneurs d'ordres dans le réseau.

Un procédé de communication selon l'invention est défini par la revendication 1.

Différents modes d'exécution du procédé sont définis par les revendications 2 à 6.

Un procédé de communication selon l'invention est défini par la revendication 7.

Différents modes d'exécution du procédé sont définis par les revendications 8 à 14.

Un procédé de communication selon l'invention est défini par la revendication 15.

Un mode d'exécution du procédé est défini par les revendications 16.

Un dispositif d'analyse selon l'invention est défini par la revendication 17.

Un élément de contrôle selon l'invention est défini par la revendication 18.

Un mode de réalisation d'un élément de contrôle est défini par la revendication 19.

Une installation selon l'invention est définie par la revendication 20.

Un mode de réalisation d'une installation de contrôle est défini par la revendication 21.

L'invention concerne aussi un support d'enregistrement lisible par un processeur sur lequel est enregistré un programme d'ordinateur comprenant des instructions pour l'exécution des étapes de l'un des procédés définis précédemment, notamment d'un procédé mis en oeuvre par le dispositif d'analyse ou d'un procédé mis en oeuvre par l'élément de contrôle.

L'invention concerne encore un programme d'ordinateur comprenant des instructions pour l'exécution des étapes de l'un des procédés définis précédemment, notamment d'un procédé mis en oeuvre par le dispositif d'analyse ou d'un procédé mis en oeuvre par l'élément de contrôle.

L'invention sera mieux comprise à la lecture de la description qui va suivre, donnée uniquement à titre d'exemple et faite en se référant aux dessins annexés sur lesquels :
La figure 1 représente une installation immotique INST selon l'invention.
Les figures 2a et 2b représentent des échanges des messages entre les différents équipements d'une installation immotique mettant en oeuvre l'invention.
La figure 3 représente, sous forme d'organigramme, les principales étapes d'un procédé mis en oeuvre par un dispositif d'analyse selon l'invention.
La figure 4 représente, sous forme d'organigramme, les principales étapes d'un procédé mis en oeuvre par un élément de contrôle selon l'invention.

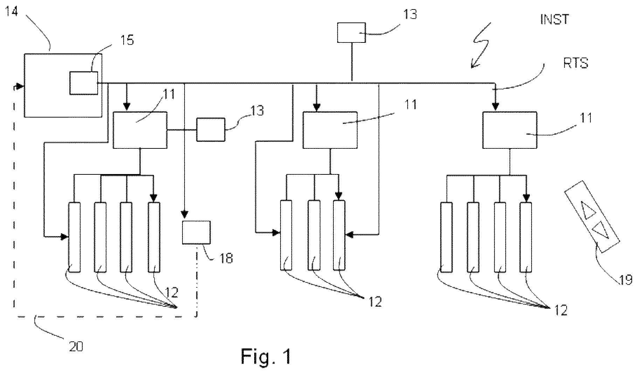

Une installation INST selon l'invention sera maintenant décrite en référence à la figure 1.

Les différents équipements installés dans le réseau communiquent entre eux par le biais d'un premier moyen ou média de communication sans fil (radio notamment) ou filaire (bus câblés, courants porteurs). Ce premier média de communication RTS est représenté en trait continu sur la figure 1.

L'automatisation de l'installation du bâtiment, notamment des éléments mobiles et de confort via leurs actionneurs 12 est basée sur la présence d'un élément de contrôle 14, des moyens d'interface et de commandes locaux 11 et des capteurs divers 13 (présence, luminosité, température, etc).

L'installation peut comprendre en outre des unités de commande locales 19 destinées à transmettre des messages aux équipements électriques 11, 12, 13 individuellement ou par groupe. Ces unités de commande locales peuvent utiliser le même média de communication RTS.

En s'appuyant sur ce premier média de communication RTS, l'élément de contrôle 14 envoie des messages, notamment des ordres, à un ou plusieurs moyens d'interface et commande locaux 11, dans le but de piloter les actionneurs 12. L'élément de contrôle 14 peut être du type multicanaux, c'est-à-dire qu'il contrôle, pilote ou gère plusieurs équipements électriques 11, 12, 13.

L'envoi d'ordres depuis l'élément de contrôle 14 vers les équipements électriques 11, 12, 13 nécessite au moins une transmission unidirectionnelle. Cette restriction peut être due à des contraintes de coût, de simplicité d'installation ou des versions matérielles et logicielles des équipements en présence.

Un tel fonctionnement peut être suffisant si l'environnement de l'installation permet une transmission sans perturbations. Dans ce cas, un message envoyé peut être considéré comme étant correctement reçu par son destinataire. Un ordre de sécurité peut être répété.

A noter que le premier média de communication RTS et l'élément de contrôle 14 pourraient permettre une communication bidirectionnelle, mais des restrictions dues aux équipements électriques 11, 12, 13 imposent une limitation à une communication unidirectionnelle dans le sens depuis l'élément de contrôle 14 vers les équipements électriques 11, 12.

Dans le cas d'un environnement perturbé, par exemple dû à la présence de plusieurs équipements électriques, de plusieurs messages simultanés, ou des perturbations d'un message envoyé ne peut pas être considéré comme étant toujours correctement reçu par son destinataire. Pour éviter la perte des messages ou une répétition systématique des messages, ce qui encombrerait le réseau et causerait des perturbations supplémentaires, l'invention propose une solution simple et économique d'évaluation des conditions de réception d'un message par le ou les équipements électriques destinataires.

La configuration de l'installation INST est effectuée habituellement à la mise en service, par câblage et/ou par programmation. Si lors de l'installation les équipements électriques sont configurés pour une transmission unidirectionnelle, une modification en vue de la mise en oeuvre d'une transmission bidirectionnelle peut être coûteuse, à cause des accès difficiles aux équipements électriques.

De plus ces opérations nécessitent une intervention sur le site où l'installation fonctionne, ce qui entraîne un coût important et une perturbation du fonctionnement de l'installation, voire le remplacement des équipements électriques.

Dans un mode de réalisation préféré, le premier média de communication RTS est un média de communication sans fil monodirectionnel. C'est le cas des nombreux réseaux existants, auxquels l'invention apporte une possibilité d'évolution simple et économique.

L'installation comprend en outre un dispositif d'analyse 18 comprenant des moyens de réception aptes à recevoir les messages transitant sur le premier média de communication RTS à destination d'au moins une partie des équipements électriques 11, 12, 13, ainsi que des moyens de transmission aptes à transmettre à l'élément de contrôle 14 des informations relatives à la réception par le dispositif d'analyse 18 des messages à destination d'au moins une partie des équipements électriques 11, 12, 13.

En effet, le boîtier d'analyse 18 peut estimer la probabilité de bonne réception des messages par leurs destinataires se basant sur ses propres conditions de réception de ces mêmes messages. Ensuite le dispositif d'analyse 18 envoie à l'élément de contrôle 14 un compte rendu de réception des messages à destination des équipements électriques 11, 12, 13, permettant ainsi à ce dernier d'estimer si une réémission est nécessaire.

La probabilité estimée est par exemple binaire et prend une valeur haute lorsque le dispositif d'analyse a pu reconnaître ou comprendre le message et prend une valeur basse dans le cas contraire. La réémission est réalisée en cas de valeur basse de la probabilité. La réémission n'est pas réalisée en cas de valeur haute de la probabilité.

Le dispositif d'analyse 18 peut comprendre des moyens d'interface homme-machine lui permettant d'informer un utilisateur des bonnes ou mauvaises conditions de réception des messages. Des tels moyens peuvent être des simples diodes électroluminescentes, signalant par exemple en lumière verte une bonne réception et en rouge une mauvaise réception, ou des écrans permettant l'affichage des informations plus détaillées concernant les messages reçus par le dispositif d'analyse 18.

La solution d'utiliser un dispositif d'analyse 18 pour créer une voie de retour vers l'émetteur, permet à la fois d'ajouter une nouvelle fonctionnalité à l'installation, tout en gardant la configuration matérielle et/ou logicielle des équipements électriques 11, 12, 13.

Dans un mode de réalisation, le dispositif d'analyse 18 étant apte à recevoir les messages envoyés par l'intermédiaire du premier média de communication RTS, il peut recevoir les messages en provenance des unités de commande locales 19, et si ces messages transitent sur le premier média de communication RTS, les retransmettre à l'élément de contrôle 14.

De cette manière, l'élément de contrôle 14 dispose des informations sur l'enchaînement des commandes envoyées manuellement par un utilisateur en plus des commandes générées de manière automatique par l'élément de contrôle 14, ce qui lui permet de compléter sa connaissance de la situation du réseau. Il peut ainsi adapter les scénarii pour le contrôle automatique des équipements électriques 11, 12, 13 aux commandes locales et optimiser les conditions de confort et/ou économie d'énergie.

Selon un mode de réalisation, l'élément de contrôle 14, notamment du type multicanaux, est destiné à transmettre des messages aux équipements électriques 11, 12, 13 individuellement ou par groupe. En effet, l'élément de contrôle ayant des capacités d'adressage, la gestion des actionneurs est plus souple et plus précise, en fonction des conditions locales spécifiques à un actionneur ou à un groupe d'actionneurs, par exemple des actionneurs pilotant un groupe de stores ayant une même exposition solaire, ou des actionneurs situés dans des bureaux ayant les mêmes horaires et pouvant utiliser les mêmes scénarii.

Reste le problème de l'acquittement lors de commandes de groupe, même dans le cas d'une transmission bidirectionnelle. En effet, si des messages sont envoyés à un groupe de destinataires, un message d'accusé de réception, ou acquittement, envoyé par chaque équipement électrique destinataire 11, 12, 13, peut conduire à un encombrement du réseau.

Les capteurs 13 peuvent délivrer des informations soit directement aux actionneurs 12, soit aux moyens d'interface et de commande 11, soit à l'élément 14. Dans le cas ou les informations issues des capteurs 13 sur le premier média de communication RTS pour être fournies aux équipements électriques 11, 12, ces informations peuvent être reçues par le dispositif d'analyse 18 et retransmises ensuite à l'élément de contrôle 14. De cette manière, l'élément de contrôle 14 peut optimiser des scénarii en fonction de conditions locales, et ce sans intervention sur le site.

Il est à noter que les moyens de transmission des comptes-rendus de réception par le dispositif d'analyse 18 vers l'élément de contrôle 14 peuvent utiliser un deuxième moyen ou média de communication 20 distinct ou identique au premier média de communication RTS.

Le dispositif d'analyse 18 comprend tous les éléments matériels et/ou logiciels permettant de mettre en oeuvre le procédé de communication objet de l'invention. En particulier, il comprend :
- Un élément de réception d'au moins une partie d'un message MSG transitant sur le premier média de communication RTS, à destination de l'au moins un équipement électrique 11, 12 ; et
- Un élément de transmission à l'élément de contrôle 14 d'au moins une information INF relative à la réception par le dispositif d'analyse 18 de l'au moins une partie de message MSG.

L'élément de contrôle 14 comprend tous les éléments matériels et/ou logiciels permettant de mettre en oeuvre le procédé de communication objet de l'invention. En particulier, il comprend un élément de réception depuis le dispositif d'analyse 18 d'au moins une information INF relative à la réception par le dispositif d'analyse 18 d'au moins une partie de message MSG transitant sur le premier média de communication RTS, à destination d'au moins un équipement électrique 11, 12.

L'installation comprend tous les éléments matériels et/ou logiciels permettant de mettre en oeuvre le procédé de communication objet de l'invention. En particulier, elle comprend :
- Un élément d'émission 15 de l'élément de contrôle 14 ou d'une unité de commande locale 19 ou d'un capteur 13 de l'installation d'au moins un message MSG à destination de l'au moins un équipement électriques 11, 12 via le premier média de communication RTS;
- Un élément de réception par le dispositif d'analyse 18 d'au moins une partie du message MSG transitant sur le premier média de communication RTS, à destination de l'au moins un équipement électrique 11, 12 ; et
- Un élément de transmission à l'élément de contrôle 14 d'au moins une information INF relative à la réception par le dispositif d'analyse 18 de l'au moins une partie de message MSG.

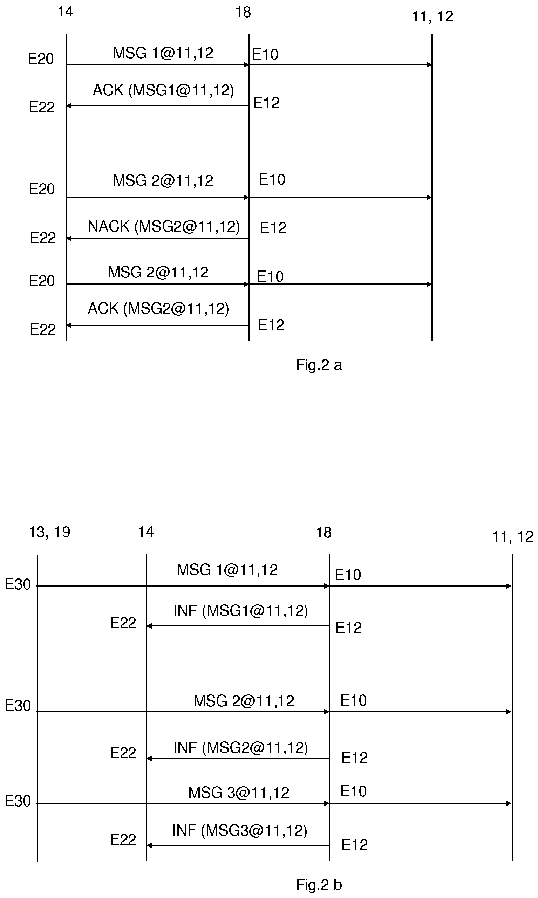

Un mode de fonctionnement d'une installation mettant en oeuvre l'invention est maintenant décrit en référence à la figure 2. Le dispositif d'analyse 18 muni des moyens de réception adaptés au premier média de communication RTS, et placé dans des conditions de réception similaires aux conditions de réception des équipements électriques 11, 12, 13 destinataires des messages émis par l'élément de contrôle 14, subira les mêmes éventuelles perturbations.

La vérification de l'intégrité des messages reçus, par des techniques connues de l'homme du métier, telles que les codes détecteurs d'erreurs, permet au dispositif d'analyse 18 de déterminer si le message qu'il reçoit est compréhensible et donc d'estimer avec une probabilité élevée si les messages respectifs ont été bien reçus par le ou les équipement(s) électriques 11, 12, 13, destinataires de ces messages.

Ensuite le dispositif d'analyse 18 envoie le résultat de cette estimation vers l'élément de contrôle 14 utilisant le deuxième média de communication 20.

Ainsi, un premier message MSG1@11,12 envoyé à un ou plusieurs équipements électriques 11, 12 est reçu correctement par le dispositif d'analyse 18 ; ensuite le dispositif d'analyse 18 envoie un message de compte rendu de réception ACK(MSG1@11,12) indiquant une réception correcte. L'élément de contrôle 14 passe alors à l'émission du message suivant, MSG2@11,12. Ce message n'étant pas reçu correctement reçu par le dispositif d'analyse 18, le compte rendu de réception NACK(MSG2@11,12) indique une réception défectueuse. Dans ce cas ou dans le cas d'absence d'un compte-rendu de réception dans un délai prédéterminé après l'émission, l'élément de contrôle 14 effectue une répétition du message MSG2@11,12.

Si les équipements électriques 11, 12, 13 destinataires des messages envoyés, sont équipés des récepteurs radio monodirectionnels ne permettant pas l'émission des messages de confirmation de bonne réception, l'envoi de l'estimation des conditions de réception par le dispositif d'analyse permet à l'élément de contrôle 14 de déterminer si une réémission est nécessaire ou pas.

L'analyse des conditions de réception par le dispositif d'analyse 18 permet également de fournir des explications relatives à la mauvaise réception soit au niveau du dispositif d'analyse 18, soit au niveau de l'élément de contrôle 14. Le retour d'information utilisateur permet également de définir les problèmes rencontrés.

De cette manière, l'installation bénéficie d'une nouvelle fonctionnalité, permettant un retour d'information sur l'émission effectuée par l'élément de contrôle 14 à destination des équipements électriques 11, 12, monodirectionnels.

Grâce à la réception des messages contenant des estimations de conditions de réception, l'élément de contrôle 14 peut déterminer si une répétition des messages est nécessaire ou non, et assurer ainsi un fonctionnement automatique fiable.

Il est à noter que, contrairement à un cas d'envoi des messages avec une unité de commande locale manuelle par un utilisateur qui peut constater l'exécution des ordres envoyés, dans le cas d'un fonctionnement automatique (sans intervention de l'utilisateur) de l'élément de contrôle 14, le retour d'information sur l'émission est nécessaire, pour éviter la retransmission inutile, voire contradictoire, des messages correctement reçus, ou la perte des messages.

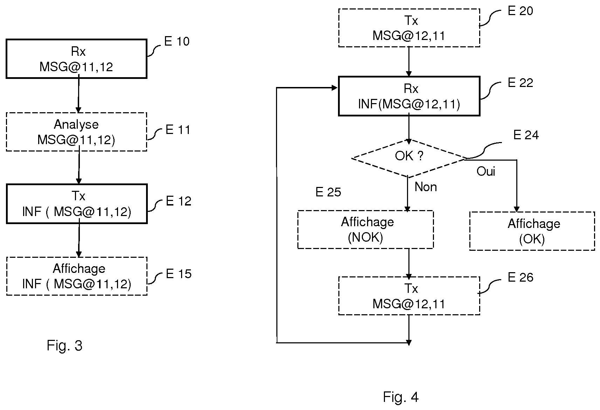

Les principales étapes d'un procédé de communication mis en oeuvre par un dispositif d'analyse 18 selon l'invention, dans une installation INST telle que décrite précédemment, sera décrit maintenant en référence à la figure 3.

Au cours d'une première étape E10, le dispositif d'analyse 18 reçoit au moins une partie d'un message MSG transitant sur le premier média de communication RTS, à destination d'au moins une partie des équipements électriques 11, 12 ; ensuite, au cours d'une deuxième étape E12, le dispositif d'analyse 18 transmet à l'élément de contrôle 14 des informations INF relatives à la réception de l'au moins une partie de message MSG à destination d'au moins une partie des équipements électriques 11, 12.

Optionnellement, le dispositif d'analyse peut analyser, lors d'une étape E15, les conditions de réception du message MSG. Ensuite, il peut afficher, lors d'une étape E15, le résultat de cette analyse. Cet affichage ou émission visuelle peut utiliser une interface homme-machine, par exemple un écran permettant l'affichage des informations détaillées concernant le résultat de l'analyse, ou une diode électroluminescente indiquant par une couleur verte une réception correcte et par une couleur rouge une réception défectueuse.

Les principales étapes d'un procédé de communication mis en oeuvre par un élément de contrôle 14 selon un mode de réalisation préféré, dans une installation INST telle que décrite précédemment, sera décrit maintenant en référence à la figure 4.

Au cours d'une première étape E20 l'élément de contrôle 14 émet au moins un message MSG, par l'intermédiaire du premier média de communication RTS, à destination d'au moins une partie des équipements électriques 11, 12.

Ensuite, au cours d'une étape E22 l'élément de contrôle 14 reçoit depuis le dispositif d'analyse 18 des informations INF relatives à la réception par le dispositif d'analyse 18 du message MSG.

Dans un premier mode de réalisation, ces informations INF peuvent être le résultat d'une évaluation effectuée par le dispositif d'analyse 18 lors de l'étape E11 précédemment décrite. Dans ce cas, le dispositif d'analyse 18 peut envoyer un message de compte-rendu de réception, ou d'acquittement. Le message d'acquittement ACK est positif, si lors de l'étape E11 le dispositif d'analyse 18 estime qu'il y a une haute probabilité de réception correcte du message MSG par l'équipement électrique 11, 12.

Le message d'acquittement NACK est négatif, si lors de l'étape E11 le dispositif d'analyse 18 estime qu'il y a une faible probabilité de réception correcte du message MSG par l'équipement électrique 11, 12.

L'élément de contrôle 14 détermine au cours d'une étape E24 par lecture des informations INF si la réception du message MSG est défectueuse.

Dans un deuxième mode de réalisation, les informations INF peuvent consister en tout ou partie du message MSG, tel que reçu par le dispositif d'analyse 18. Dans ce cas le dispositif de contrôle 14 dispose à la fois du message MSG tel que émis lors de l'étape d'émission E20 et d'au moins une partie du message MSG tel que reçu par le dispositif d'analyse 18. En comparant ces informations, le dispositif de contrôle 14 peut estimer lors de l'étape de détermination E24 si la réception du message MSG par l'équipement électrique 11, 12 peut être considérée défectueuse.

Dans le cas où une réception défectueuse a été déterminée, quel que soit le mode de détermination utilisé, ou si aucune réception depuis le dispositif d'analyse 18 n'est réalisée pendant une durée prédéterminée suite à l'émission du message MSG ou pendant une temporisation prédéterminée déclenchée par l'émission du message MSG, l'élément de contrôle réémet le message MSG à destination d'au moins une partie des équipements électriques 12, 11.

Optionnellement, l'élément de contrôle 14 peut afficher, lors d'une étape E25, le résultat de l'analyse effectuée au cours de l'étape E24. Cet affichage ou émission visuelle peut utiliser une interface homme-machine, par exemple un écran permettant l'affichage des informations détaillées concernant le résultat de l'analyse, ou une diode électroluminescente indiquant par une couleur verte une réception correcte et par une couleur rouge une réception défectueuse.

## Revendications

1. Procédé de communication dans une installation (INST) contrôlant de manière automatisée des conditions de confort et/ou de sécurité dans un bâtiment comprenant
- au moins un équipement électrique (11, 12) du bâtiment apte à recevoir des messages par l'intermédiaire d'un premier média de communication (RTS),
- un élément de contrôle (14) de l'au moins un équipement électrique (11, 12) et
- un dispositif d'analyse (18),
le procédé étant mis en oeuvre par le dispositif d'analyse (18) et **caractérisé en ce que** la communication entre l'élément de contrôle (14) et l'au moins un équipement électrique (11, 12) est unidirectionnelle et dans le sens depuis l'élément de contrôle (14) vers l'au moins un équipement électrique (11, 12),
et **en ce qu'**il comprend
- une étape (E10) de réception d'au moins une partie d'un message (MSG) transitant sur le premier média de communication (RTS), à destination de l'au moins un équipement électrique (11, 12) ; et
- une étape (E12) de transmission à l'élément de contrôle (14) d'au moins une information (INF) relative à la réception par le dispositif d'analyse (18) de l'au moins une partie de message (MSG).

2. Procédé de communication selon la revendication 1, **caractérisé en ce que** l'étape (E12) de transmission consiste à émettre vers l'élément de contrôle (14) l'au moins une partie de message (MSG) telle que reçue par le dispositif d'analyse (18).

3. Procédé de communication selon la revendication 1, **caractérisé en ce que**
- il comprend en outre une étape (E11)
- d'analyse des conditions de réception de l'au moins une partie de message (MSG) par le dispositif d'analyse (18), et
- d'estimation d'une probabilité de réception correcte par l'au moins un équipement électrique (11, 12) du message dont fait partie l'au moins une partie de message (MSG) ;
et **en ce que**
- l'étape (E12) de transmission consiste à émettre vers l'élément de contrôle (14) un message d'acquittement (ACK, NACK) contenant le résultat de l'étape (E11) d'estimation d'une probabilité de réception correcte dudit au moins un message (MSG) par l'au moins un équipement électrique (11, 12).

4. Procédé de communication selon la revendication 3, **caractérisé en ce que**
- il comprend en outre une étape (E15) d'affichage d'un niveau de probabilité de réception correcte dudit au moins un message (MSG) par l'au moins un équipement électrique (11, 12) par l'intermédiaire d'une interface homme-machine.

5. Procédé de communication selon l'une des revendications précédentes, **caractérisé en ce que** l'étape (E12) de transmission est effectuée par l'intermédiaire d'un deuxième média de communication (20) différent du premier média de communication (RTS) et/ou **en ce que** l'étape (E12) de transmission est effectuée avant l'expiration d'une temporisation prédéterminée déclenchée par l'émission du message (MSG).

6. Procédé de communication dans une installation (INST) contrôlant de manière automatisée des conditions de confort et/ou de sécurité dans un bâtiment comprenant
- au moins un équipement électrique (11, 12) du bâtiment apte à recevoir des messages par l'intermédiaire d'un premier média de communication (RTS),
- un élément de contrôle (14) de l'au moins un équipement électrique (11, 12), et
- un dispositif d'analyse (18),
le procédé étant mis en oeuvre par l'élément de contrôle (14), la communication entre l'élément de contrôle (14) et l'au moins un équipement électrique (11, 12) étant unidirectionnelle et dans le sens depuis l'élément de contrôle (14) vers l'au moins un équipement électrique (11, 12), le procédé comprenant
- une étape (E22) de réception depuis le dispositif d'analyse (18) d'au moins une information (INF) relative à la réception par le dispositif d'analyse (18) d'au moins une partie de message (MSG) transitant sur le premier média de communication (RTS), à destination d'au moins un équipement électrique (11, 12).

7. Procédé de communication selon la revendication précédente, **caractérisé en ce qu'**il comprend en outre
- une étape (E20) d'émission d'au moins un message (MSG), par l'intermédiaire du premier média de communication (RTS), à destination de l'au moins un équipement électrique (11, 12).

8. Procédé de communication selon la revendication précédente, **caractérisé en ce qu'**il comprend en outre
- une étape (E24) d'obtention d'une indication (IND) sur l'état de la réception du message (MSG) par l'au moins un équipement électrique (11, 12), en fonction de l'au moins une information (INF) ; et
- une étape (E26) de réémission dudit au moins un message (MSG) à destination de l'au moins un équipement électrique (11, 12), si l'indication (IND) indique une réception défectueuse du message (MSG) ou aucune information (INF) n'est reçue à l'échéance d'une temporisation prédéterminée.

9. Procédé de communication selon la revendication précédente, **caractérisé en ce que** l'étape (E24) d'obtention de l'indication (IND) comprend une comparaison de l'au moins une information (INF) à au moins une partie du message (MSG) tel qu'envoyé lors de l'étape d'émission (E20).

10. Procédé de communication selon l'une des revendications 6 à 9, **caractérisé en ce que** l'au moins une information (INF) comprend au moins une partie du message (MSG) telle que reçue par le dispositif d'analyse (18) et/ou **en ce que** l'étape (E22) de réception est effectuée par l'intermédiaire d'un deuxième média de communication (20) différent du premier média de communication (RTS)..

11. Procédé de communication selon l'une des revendications 7 à 10, **caractérisé en ce que** l'au moins une information (INF) comprend un message d'acquittement (ACK, NACK) contenant une estimation, notamment une estimation effectuée par le dispositif d'analyse (18) d'une probabilité de réception correcte dudit au moins un message (MSG) par l'au moins un équipement électrique (11,12) et/ou **en ce que** le procédé comprend en outre une étape (E25) d'affichage de la probabilité de réception correcte dudit au moins un message (MSG) par les équipements électriques (11, 12) par l'intermédiaire d'une interface homme-machine.

12. Procédé de communication dans une installation (INST) contrôlant de manière automatisée des conditions de confort et/ou de sécurité dans un bâtiment comprenant
- au moins un équipement électrique (11, 12) du bâtiment apte à recevoir des messages par l'intermédiaire d'un premier média de communication (RTS),
- un élément de contrôle (14) de l'au moins un équipement électrique (11, 12) et
- un dispositif d'analyse (18),
la communication entre l'élément de contrôle (14) et l'au moins un équipement électrique (11, 12) étant unidirectionnelle et dans le sens depuis l'élément de contrôle (14) vers l'au moins un équipement électrique (11, 12) et le procédé comprenant
- une étape (E20, E30) d'émission par l'élément de contrôle (14) ou par une unité de commande locale (19) ou par un capteur (13) de l'installation d'au moins un message (MSG) à destination de l'au moins un équipement électriques (11, 12) via le premier média de communication (RTS);
- une étape (E10) de réception par le dispositif d'analyse (18) d'au moins une partie du message (MSG) transitant sur le premier média de communication (RTS), à destination de l'au moins un équipement électrique (11, 12) ; et
- une étape (E12) de transmission à l'élément de contrôle (14) d'au moins une information (INF) relative à la réception par le dispositif d'analyse (18) de l'au moins une partie de message (MSG).

13. Procédé selon la revendication précédente, **caractérisé en ce qu'**il comprend en outre une étape (E11, E24)
- d'analyse de l'au moins une partie du message (MSG) et
- de déduction d'une probabilité de correcte réception par les équipements électriques (11, 12) et/ou de correcte interprétation du message (MSG),
ladite étape (E11, E24) étant mise en oeuvre par le dispositif d'analyse (18) et/ou par l'élément de contrôle (14).

14. Dispositif d'analyse (18) adapté à mettre en oeuvre un procédé selon l'une des revendications 1 à 5, comprenant un élément de réception apte à recevoir au moins une partie d'un message (MSG) transitant sur un premier média de communication (RTS) à destination d'au moins un équipement électrique (11, 12) et un élément de transmission apte à transmettre à un élément de contrôle (14) des informations relatives à la réception par le dispositif d'analyse (18) de l'au moins une partie de message (MSG).

15. Elément de contrôle (14) adapté à mettre en oeuvre un procédé selon l'une des revendications 6 à 11, comprenant un élément de réception apte à recevoir une information relative à la réception par un dispositif d'analyse (18) d'au moins une partie d'un message à destination de l'au moins un équipement électrique (11, 12).

16. Elément de contrôle (14) selon la revendication précédente, **caractérisé en ce qu'**il comprend un élément d'émission apte à émettre des messages (MSG) par l'intermédiaire d'un premier média de communication (RTS) à destination de l'au moins un équipement électrique (11, 12).

17. Installation (INST) de contrôle automatisé des conditions de confort et/ou de sécurité dans un bâtiment, **caractérisée en ce qu'**elle comprend
- au moins un équipement électrique (11, 12) du bâtiment apte à recevoir des messages par l'intermédiaire d'un premier média de communication (RTS), notamment un média de communication radio monodirectionnel,
- un dispositif d'analyse (18) selon la revendication 14 ; et
- un élément de contrôle (14) selon la revendication 15 ou 16.

## Patentansprüche

1. Verfahren zur Kommunikation in einer Anlage (INST), die auf automatisierte Weise Komfort-und/oder Sicherheitsbedingungen in einem Gebäude kontrolliert, umfassend
- mindestens eine elektrische Ausrüstung (11, 12) des Gebäudes, die geeignet ist, Nachrichten über ein erstes Kommunikationsmedium (RTS) zu empfangen,
- ein Element (14) zur Kontrolle der mindestens einen elektrischen Ausrüstung (11, 12), und
- eine Analysevorrichtung (18),
wobei das Verfahren von der Analysevorrichtung (18) eingesetzt wird und **dadurch gekennzeichnet ist, dass** die Kommunikation zwischen dem Kontrollelement (14) und der mindestens einen elektrischen Ausrüstung (11, 12) unidirektional und in die Richtung von dem Kontrollelement (14) zu der mindestens einen elektrischen Ausrüstung (11, 12) erfolgt,
und dass es umfasst
- einen Schritt (E10) des Empfangs mindestens eines Teils einer Nachricht (MSG), der auf dem ersten Kommunikationsmedium (RTS) in Richtung der mindestens einen elektrischen Ausrüstung (11, 12) läuft; und
- einen Schritt (E12) der Übertragung an das Kontrollelement (14) mindestens einer Information (INF) zum Empfang des mindestens einen Nachrichtenteils (MSG) durch die Analysevorrichtung (18).

2. Kommunikationsverfahren nach Anspruch 1, **dadurch gekennzeichnet, dass** der Übertragungsschritt (E12) darin besteht, zu dem Kontrollelement (14) den mindestens einen Nachrichtenteil (MSG), wie von der Analysevorrichtung (18) empfangen, zu senden.

3. Kommunikationsverfahren nach Anspruch 1, **dadurch gekennzeichnet, dass**
- es ferner einen Schritt (E11)
- der Analyse der Empfangsbedingungen des mindestens einen Nachrichtenteils (MSG) durch die Analysevorrichtung (18), und
- der Schätzung einer Wahrscheinlichkeit eines korrekten Empfangs der Nachricht, deren Teil der mindestens eine Nachrichtenteil (MSG) ist, durch die mindestens eine elektrische Ausrüstung (11, 12) umfasst;
und dass
- der Übertragungsschritt (E12) darin besteht, zu dem Kontrollelement (14) eine Quittierungsnachricht (ACK, NACK) zu senden, die das Resultat des Schrittes (E11) der Schätzung einer Wahrscheinlichkeit eines korrekten Empfangs der mindestens einen Nachricht (MSG) durch die mindestens eine elektrische Ausrüstung (11, 12) enthält.

4. Kommunikationsverfahren nach Anspruch 3, **dadurch gekennzeichnet, dass**
- es ferner einen Schritt (E15) der Anzeige eines Wahrscheinlichkeitsniveaus eines korrekten Empfangs der mindestens einen Nachricht (MSG) durch die mindestens eine elektrische Ausrüstung (11, 12) über eine Mensch-Maschine-Schnittstelle umfasst.

5. Kommunikationsverfahren nach einem der vorhergehenden Ansprüche, **dadurch gekennzeichnet, dass** der Übertragungsschritt (E12) mit Hilfe eines zweiten Kommunikationsmediums (20), das sich von dem ersten Kommunikationsmedium (RTS) unterscheidet, durchgeführt wird, und/oder dass der Übertragungsschritt (E12) vor Ablauf einer vorbestimmten Verzögerung, die durch das Senden der Nachricht (MSG) ausgelöst wird, durchgeführt wird.

6. Kommunikationsverfahren in einer Anlage (INST), die auf automatisierte Weise Komfort- und/oder Sicherheitsbedingungen in einem Gebäude kontrolliert, umfassend
- mindestens eine elektrische Ausrüstung (11, 12) des Gebäudes, die geeignet ist, Nachrichten über ein erstes Kommunikationsmedium (RTS) zu empfangen,
- ein Element (14) zur Kontrolle der mindestens einen elektrischen Ausrüstung (11, 12), und
- eine Analysevorrichtung (18),
wobei das Verfahren von der Kontrollvorrichtung (14) eingesetzt wird, wobei die Kommunikation zwischen dem Kontrollelement (14) und der mindestens einen elektrischen Ausrüstung (11, 12) unidirektional und in die Richtung von dem Kontrollelement (14) zu der mindestens einen elektrischen Ausrüstung (11, 12) erfolgt, wobei das Verfahren umfasst
- einen Schritt (E22) des Empfangs von der Analysevorrichtung (18) mindestens einer Information (INF) zum Empfang des mindestens einen Nachrichtenteils (MSG), der auf dem ersten Kommunikationsmedium (RTS) in Richtung der mindestens einen elektrischen Ausrüstung (11, 12) läuft.

7. Kommunikationsverfahren nach dem vorhergehenden Anspruch, **dadurch gekennzeichnet, dass** es ferner umfasst
- einen Schritt (E20) des Sendens mindestens einer Nachricht (MSG) über das erste Kommunikationsmedium (RTS) in Richtung der mindestens einen elektrischen Ausrüstung (11, 12).

8. Kommunikationsverfahren nach dem vorhergehenden Anspruch, **dadurch gekennzeichnet, dass** es ferner umfasst
- einen Schritt (E24) des Erhalts einer Angabe (IND) zum Zustand des Empfangs der Nachricht (MSG) durch die mindestens eine elektrische Ausrüstung (11, 12) in Abhängigkeit von der mindestens einen Information (INF); und
- einen Schritt (E26) des Wiedersendens der mindestens einen Nachricht (MSG) in Richtung der mindestens einen elektrischen Ausrüstung (11, 12), wenn die Angabe (IND) einen fehlerhaften Empfang der Nachricht (MSG) anzeigt, oder wenn keine Information (INF) nach Ablauf einer vorbestimmten Verzögerung empfangen wird.

9. Kommunikationsverfahren nach dem vorhergehenden Anspruch, **dadurch gekennzeichnet, dass** der Schritt (E24) des Erhalts der Angabe (IND) einen Vergleich der mindestens einen Information (INF) mit mindestens einem Teil der Nachricht (MSG), wie in dem Sendeschritt (E20) gesandt, umfasst.

10. Kommunikationsverfahren nach einem der Ansprüche 6 bis 9, **dadurch gekennzeichnet, dass** die mindestens eine Information (INF) mindestens einen Teil der Nachricht (MSG), wie von der Analysevorrichtung (18) empfangen, umfasst, und/oder dass der Empfangsschritt (E22) mit Hilfe eines zweiten Kommunikationsmediums (20), das sich vom ersten Kommunikationsmedium (RTS) unterscheidet, durchgeführt wird.

11. Kommunikationsverfahren nach einem der Ansprüche 7 bis 10, **dadurch gekennzeichnet, dass** die mindestens eine Information (INF) eine Quittierungsnachricht (ACK, NACK) umfasst, die eine Schätzung, insbesondere eine von der Analysevorrichtung (18) durchgeführte Schätzung einer Wahrscheinlichkeit eines korrekten Empfangs der mindestens einen Nachricht (MSG) durch die mindestens eine elektrische Ausrüstung (11, 12) enthält, und/oder dass das Verfahren ferner einen Schritt (E25) der Anzeige der Wahrscheinlichkeit eines korrekten Empfangs der mindestens einen Nachricht (MSG) durch die elektrischen Ausrüstungen (11, 12) durch eine Mensch-Maschine-Schnittstelle umfasst.

12. Verfahren zur Kommunikation in einer Anlage (INST), die auf automatisierte Weise Komfort-und/oder Sicherheitsbedingungen in einem Gebäude kontrolliert, umfassend
- mindestens eine elektrische Ausrüstung (11, 12) des Gebäudes, die geeignet ist, Nachrichten über ein erstes Kommunikationsmedium (RTS) zu empfangen,
- ein Element (14) zur Kontrolle der mindestens einen elektrischen Ausrüstung (11, 12), und
- eine Analysevorrichtung (18),
wobei die Kommunikation zwischen dem Kontrollelement (14) und der mindestens einen elektrischen Ausrüstung (11, 12) unidirektional und in die Richtung von dem Kontrollelement (14) zu der mindestens einen elektrischen Ausrüstung (11, 12) erfolgt,
und wobei das Verfahren umfasst
- einen Schritt (E20, E30) des Sendens durch das Kontrollelement (14) oder durch eine lokale Steuereinheit (19) oder durch einen Sensor (13) der Anlage mindestens einer Nachricht (MSG) in Richtung der mindestens einen elektrischen Ausrüstung (11, 12) über das erste Kommunikationsmedium (RTS);
- einen Schritt (E10) des Empfang mindestens eines Teils der Nachricht (MSG), die auf dem ersten Kommunikationsmedium (RTS) in Richtung der mindestens einen elektrischen Ausrüstung (11, 12) läuft, durch die Analysevorrichtung (18) ; und
- einen Schritt (E12) der Übertragung an das Kontrollelement (14) mindestens einer Information (INF) zum Empfang des mindestens einen Nachrichtenteils (MSG) durch die Analysevorrichtung (18).

13. Verfahren nach dem vorhergehenden Anspruch, **dadurch gekennzeichnet, dass** es ferner einen Schritt (E11, E24)
- der Analyse des mindestens einen Teils der Nachricht (MSG) und
- der Ableitung einer Wahrscheinlichkeit eines korrekten Empfangs durch die elektrischen Ausrüstungen (11, 12) und/oder einer korrekten Interpretation der Nachricht (MSG) umfasst,
wobei der Schritt (E11, E24) von der Analysevorrichtung (18) und/oder dem Kontrollelement (14) eingesetzt wird.

14. Analysevorrichtung (18), die eingerichtet ist, ein Verfahren nach einem der Ansprüche 1 bis 5 einzusetzen, umfassend ein Empfangselement, das geeignet ist, mindestens einen Teil einer Nachricht (MSG), die auf einem ersten Kommunikationsmedium (RTS) in Richtung mindestens einer elektrischen Ausrüstung (11, 12) läuft, zu empfangen, und ein Übertragungselement, das geeignet ist, an ein Kontrollelement (14) Informationen zum Empfang des mindestens einen Teils einer Nachricht (MSG) durch die Analysevorrichtung (18) zu übertragen.

15. Kontrollelement (4), das eingerichtet ist, ein Verfahren nach einem der Ansprüche 6 bis 11 einzusetzen, umfassend ein Empfangselement, das geeignet ist, eine Information zum Empfang mindestens eines Teils einer Nachricht in Richtung der mindestens einen elektrischen Ausrüstung (11, 12) durch eine Analysevorrichtung (18) zu empfangen.

16. Kontrollelement (14) nach dem vorhergehenden Anspruch, **dadurch gekennzeichnet, dass** es ein Sendeelement umfasst, das geeignet ist, Nachrichten (MSG) über ein erstes Kommunikationsmedium (RTS) in Richtung der mindestens einen elektrischen Ausrüstung (11, 12) zu senden.

17. Anlage (INST) zur automatisierten Kontrolle der Komfort- und/oder Sicherheitsbedingungen in einem Gebäude, **dadurch gekennzeichnet, dass** sie umfasst
- mindestens eine elektrische Ausrüstung (11, 12) des Gebäudes, die geeignet ist, Nachrichten über ein erstes Kommunikationsmedium (RTS), insbesondere ein unidirektionales Funk-Kommunikationsmedium, zu empfangen;
- eine Analysevorrichtung (18) nach Anspruch 14; und
- ein Kontrollelement (14) nach Anspruch 15 oder 16.

## Claims

1. Method of communication in an installation (INST) controlling in an automated manner comfort and/or security conditions in a building comprising
- at least one electrical appliance (11, 12) of the building able to receive messages by way of a first communication medium (RTS),
- a control element (14) for the at least one electrical appliance (11, 12) and
- an analysis device (18),
the method being implemented by the analysis device (18) and **characterized in that** the communication between the control element (14) and the at least one electrical appliance (11, 12) is one-way and in the direction from the control element (14) to the at least one electrical appliance (11, 12),
and **in that** it comprises
- a step (E10) of receiving at least one part of a message (MSG) travelling over the first communication medium (RTS), destined for the at least one electrical appliance (11, 12); and
- a step (E12) of transmitting to the control element (14) at least one information item (INF) relating to the reception by the analysis device (18) of the at least one message part (MSG).

2. Method of communication according to Claim 1, **characterized in that** the transmission step (E12) consists in sending to the control element (14) the at least one message part (MSG) such as received by the analysis device (18).

3. Method of communication according to Claim 1, **characterized in that**
- it furthermore comprises a step (E11)
- of analyzing the conditions of reception of the at least one message part (MSG) by the analysis device (18), and
- of estimating a probability of correct reception by the at least one electrical appliance (11, 12) of the message of which the at least one message part (MSG) forms part;
and **in that**
- the transmission step (E12) consists in sending to the control element (14) an acknowledgement message (ACK, NACK) containing the result of the step (E11) of estimating a probability of correct reception of the said at least one message (MSG) by the at least one electrical appliance (11, 12).

4. Method of communication according to Claim 3, **characterized in that**
- it furthermore comprises a step (E15) of displaying a level of probability of correct reception of the said at least one message (MSG) by the at least one electrical appliance (11, 12) by way of a man-machine interface.

5. Method of communication according to one of the preceding claims, **characterized in that** the transmission step (E12) is performed by way of a second communication medium (20) different from the first communication medium (RTS) and/or **in that** the transmission step (E12) is performed before the expiry of a predetermined timeout triggered by the sending of the message (MSG).

6. Method of communication in an installation (INST) controlling in an automated manner comfort and/or security conditions in a building comprising
- at least one electrical appliance (11, 12) of the building able to receive messages by way of a first communication medium (RTS),
- a control element (14) for the at least one electrical appliance (11, 12), and
- an analysis device (18),
the method being implemented by the control element (14), the communication between the control element (14) and the at least one electrical appliance (11, 12) being one-way and in the direction from the control element (14) to the at least one electrical appliance (11, 12), the method comprising
- a step (E22) of receiving from the analysis device (18) at least one information item (INF) relating to the reception by the analysis device (18) of at least one message part (MSG) travelling over the first communication medium (RTS), destined for at least one electrical appliance (11, 12).

7. Method of communication according to the preceding claim, **characterized in that** it furthermore comprises
- a step (E20) of sending at least one message (MSG), by way of the first communication medium (RTS), destined for the at least one electrical appliance (11, 12).

8. Method of communication according to the preceding claim, **characterized in that** it furthermore comprises
- a step (E24) of obtaining an indication (IND) about the state of the reception of the message (MSG) by the at least one electrical appliance (11, 12), as a function of the at least one information item (INF); and
- a step (E26) of resending the said at least one message (MSG) destined for the at least one electrical appliance (11, 12), if the indication (IND) indicates defective reception of the message (MSG) or no information item (INF) is received at the deadline of a predetermined timeout.

9. Method of communication according to the preceding claim, **characterized in that** the step (E24) of obtaining the indication (IND) comprises a comparison of the at least one information item (INF) with at least one part of the message (MSG) such as dispatched during the sending step (E20).

10. Method of communication according to one of Claims 6 to 9, **characterized in that** the at least one information item (INF) comprises at least one part, such as received by the analysis device (18), of the message (MSG) and/or **in that** the reception step (E22) is performed by way of a second communication medium (20) different from the first communication medium (RTS).

11. Method of communication according to one of Claims 7 to 10, **characterized in that** the at least one information item (INF) comprises an acknowledgement message (ACK, NACK) containing an estimation, in particular an estimation performed by the analysis device (18) of a probability of correct reception of the said at least one message (MSG) by the at least one electrical appliance (11,12) and/or **in that** the method furthermore comprises a step (E25) of displaying the probability of correct reception of the said at least one message (MSG) by the electrical appliances (11, 12) by way of a man-machine interface.

12. Method of communication in an installation (INST) controlling in an automated manner comfort and/or security conditions in a building comprising
- at least one electrical appliance (11, 12) of the building able to receive messages by way of a first communication medium (RTS),
- a control element (14) for the at least one electrical appliance (11, 12) and
- an analysis device (18),
the communication between the control element (14) and the at least one electrical appliance (11, 12) being one-way and in the direction from the control element (14) to the at least one electrical appliance (11, 12) and the method comprising
- a step (E20, E30) of sending by the control element (14) or by a local drive unit (19) or by a sensor (13) of the installation of at least one message (MSG) destined for the at least one electrical appliance (11, 12) via the first communication medium (RTS);
- a step (E10) of reception by the analysis device (18) of at least one part of the message (MSG) travelling over the first communication medium (RTS), destined for the at least one electrical appliance (11, 12); and
- a step (E12) of transmitting to the control element (14) of at least one information item (INF) relating to the reception by the analysis device (18) of the at least one message part (MSG).

13. Method according to the preceding claim, **characterized in that** it furthermore comprises a step (E11, E24)
- of analyzing the at least one part of the message (MSG) and
- of deducing a probability of correct reception by the electrical appliances (11, 12) and/or of correct interpretation of the message (MSG),
the said step (E11, E24) being implemented by the analysis device (18) and/or by the control element (14).

14. Analysis device (18) suitable for implementing a method according to one of Claims 1 to 5, comprising a receiving element able to receive at least one part of a message (MSG) travelling over a first communication medium (RTS) destined for at least one electrical appliance (11, 12) and a transmission element able to transmit to a control element (14) information items relating to the reception by the analysis device (18) of the at least one message part (MSG).

15. Control element (14) suitable for implementing a method according to one of Claims 6 to 11, comprising a receiving element able to receive an information item relating to the reception by an analysis device (18) of at least one part of a message destined for the at least one electrical appliance (11, 12).

16. Control element (14) according to the preceding claim, **characterized in that** it comprises a sending element able to send messages (MSG) by way of a first communication medium (RTS) destined for the at least one electrical appliance (11, 12).

17. Installation (INST) for automated control of the comfort and/or security conditions in a building, **characterized in that** it comprises
- at least one electrical appliance (11, 12) of the building able to receive messages by way of a first communication medium (RTS), in particular a one-way radio communication medium,
- an analysis device (18) according to Claim 14; and
- a control element (14) according to Claim 15 or 16.
